Europäisches Patentamt

European Patent Office

Office européen des brevets

(11) Publication number: **0 153 153**
**B1**

(12) **EUROPEAN PATENT SPECIFICATION**

(45) Date of publication of patent specification: 20.04.88

(51) Int. Cl.⁴: **F 02 K 9/58,** F 02 K 9/80,
F 02 K 7/18, G 05 D 7/01

(21) Application number: 85300978.5

(22) Date of filing: 14.02.85

E·R R A T U M

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | PAGE | COLUMN | LINE | LAUTET BERICHTIGT:<br>SHOULD READ :<br>DEVRAIT ETRE LU : |
|---|---|---|---|---|
| drop | 6 | 9 | 41 | increase |

15·3·89
Ausgabedatum / Date of publication / Date de la publication

Europäisches Patentamt

(19) European Patent Office

Office européen des brevets

(11) Publication number: **0 153 153**
**B1**

(12) **EUROPEAN PATENT SPECIFICATION**

(45) Date of publication of patent specification: **20.04.88**

(21) Application number: **85300978.5**

(22) Date of filing: **14.02.85**

(51) Int. Cl.⁴: **F 02 K 9/58, F 02 K 9/80, F 02 K 7/18, G 05 D 7/01**

(54) **Self compensating ducted rocket motor fuel nozzle method for regulating fuel generation.**

(30) Priority: **16.02.84 US 580580**

(43) Date of publication of application:
**28.08.85 Bulletin 85/35**

(45) Publication of the grant of the patent:
**20.04.88 Bulletin 88/16**

(84) Designated Contracting States:
**DE FR GB IT SE**

(56) References cited:
**DE-A-2 828 249**
**DE-A-3 101 560**
**FR-A-2 147 500**
**US-A-2 829 492**
**US-A-2 968 919**
**US-A-3 332 237**
**US-A-4 355 663**

(73) Proprietor: **HERCULES INCORPORATED**
**Hercules Plaza**
**Wilmington Delaware 19899 (US)**

(72) Inventor: **Gabrysch, Leslie Paul**
**405 Blue Jay**
**Hewitt Texas 76643 (US)**

(74) Representative: **De Minvielle-Devaux, Ian Benedict Peter et al**
**CARPMAELS & RANSFORD 43, Bloomsbury Square**
**London WC1A 2RA (GB)**

Courier Press, Leamington Spa, England.

## Description

This invention relates to temperature-sensitive apparatus, for use in a ducted rocket motor, for automatically setting the rate of flow of combustible fuel-rich gases between the solid-fuel gas-generating chamber and the secondary combustion chamber at a level that is responsive to the ambient temperature.

In ducted rocket motors, combustible fuel-rich gases generated from a solid fuel mass are conducted through one or more conduits to a secondary combustion chamber where they are combined with an oxidant to complete combustion and provide thrust.

The generation rate of fuel gases from the solid fuel mass varies according to its temperature and the pressure in the gas-generating chamber. The temperature directly affects the flow rate of the fuel gases if the pressure in the outlet stream, and therefore in the chamber, remains constant. The operating efficiency of the rocket motor declines when the temperature of the solid fuel mass in the gas-generating chamber falls below the temperature for which the motor is designed.

Therefore ambient temperature conditions at the time of firing can adversely affect the ability of the rocket to meet the level of propulsive power required when it is fired. An excessive margin of power must be built in to accommodate the lowest ambient temperature to be expected.

Since the pressure in the gas-generating chamber also directly affects the rate of generation of the fuel-rich gases, it is possible to compensate for changes in the temperature of the solid fuel by controlling the flow rate of the gases in the outlet stream. One way to do that is to change the cross-sectional area of the outlet conduit of the gas-generating chamber.

A device for controlling the choke area in the nozzle through which fuel-rich gases flow from a solid propellant gas generator into a secondary combustion chamber is described in US—A—4,355,663. It discloses a flow-restricting rody or "plunger" that can be moved into the flow channel to provide a desirable air-to-fuel ratio. The device is actuated by a pressure controller in response to pressure changes in the gas generator during the operation of the motor.

That type of control operates only after ignition has taken place. It would be desirable to provide means to adjust the level of thrust in direct response to the ambient temperature level at the moment of ignition.

One device which provides a particular arrangement to achieve this adjustment is shown in US—A—3,332,237, that device has a needle valve formed with a spike on the end remote from the valve seat. An angled limiting plate is positioned by a temperature sensitive element so that travel of the needle valve is limited by the limiting plate and, upon ignition of the propellant, the needle valve is driven so that the spike firmly embeds itself in the angled face of the limiting plate.

According to the present invention, there is provided a temperature-sensitive thrust regulator for a ducted solid-fuel rocket motor comprising: (A) an insulated flow section adapted for conducting fuel-rich gases from a solid-fuel generating chamber, containing a mass of solid fuel, to a secondary combustion chamber within a ducted rocket motor, said insulated flow section having inlet and outlet fuel gas flow ports and a regulating passage through the wall of the flow section between the ports; and (B) a controlling assembly including an enclosed stem section having its inward end surrounding the regulating passage and secured in a gas-tight relationship to the insulated flow section, a flow-restricting valve plunge slidable in a stem section and extendable through the regulating passage into the flow section, a fluid activated temperature-sensitive expansible element in a monitoring relationship at the outward end of the valve plunger, said temperature sensitive element comprising a bellows filled with a temperature-responsive mass of hydraulic fluid having a high coefficient of thermal expansion and being in substantially isothermal relationship with the fuel-gas generating chamber, a reactive biasing device operatively opposed to expansion of the expansible element, and locking means for immobilizing the flow-restricting valve plunger when the rocket motor is fired; characterized in that the axis of the stem section is generally radial to the flow section; one end of the bellows is axially extendable and withdrawable within the stem section, and the flow-restricting valve plunger is operatively connected to the movable end of the bellows of synchronous reciprocation of the bellows and the valve plunger; whereby changes in the ambient temperature affecting the mass of solid fuel in the generating chamber will cause proportional expansion of the hydraulic fluid and movement of the valve plunger.

Preferably, the part of the controlling assembly in substantially isothermal relationship with the mass of solid fuel is a temperature-sensing fixed-volume reservoir for the hydraulic fluid, which is outside the stem section and hydraulically connected to the bellows.

Alternatively, the fluid-activated bellows is not heat-insulated from the ambient temperature and itself acts as a resevoir for the temperature-responsive hydraulic fluid.

For example, in either case, an increase in the ambient temperature before ignition starts will be reflected in a proportional expansion of the hydraulic fluid and the bellows, and a withdrawal, corresponding to the movement of the bellows, of the flow-restricting valve plunger from its previous position in the flow section of the regulator.

Upon firing of the rocket, the new position assumed by the flow-restricting valve plunger will represent an increase in the throat cross-section of the flow section and thereby establish the conditions necessary for a lower pressure in the generating chamber, at the level required to generate fuel-rich gases at a rate that approximates the optical rate and that can then be maintained for the duration of the flight. The reverse will occur if the ambient temperature should drop before ignition.

The present invention is more fully illustrated in Figures 1—6, in which:

Figure 1 is a longitudinal section taken through a temperature-sensitive thrust regulator according to one embodiment of the invention, as it would be installed in a ducted solid-fuel rocket motor between a fuel gas generator chamber (not shown) and a secondary combustion chamber (not shown).

Figure 2 is a partial broken-away cross section along line X—X of the device represented in Figure 1, showing part of a stem section (12), all component parts common to Figures 1 and 2 bearing the same arabic numerical identification.

Figure 3 illustrates a modification of the device represented in Figure 1, also in longitudinal section, in which the fixed-volume fluid reservoir (22) of Figure 1 is eliminated and its function is replaced by a modification of the bellows (25A).

Figure 4 is a diagrammatic representation of the relationship between a fixed volume reservoir of the type illustrated in Figures 1 and 2, containing a suitable hydraulic fluid of volume ($V_r$), and a flexible metal bellows (25C) containing a variable volume ($V_o$) of the hydraulic fluid.

Figure 5 is a general diagram of the functional centers and primary variables governing operation of the regulator according to the invention.

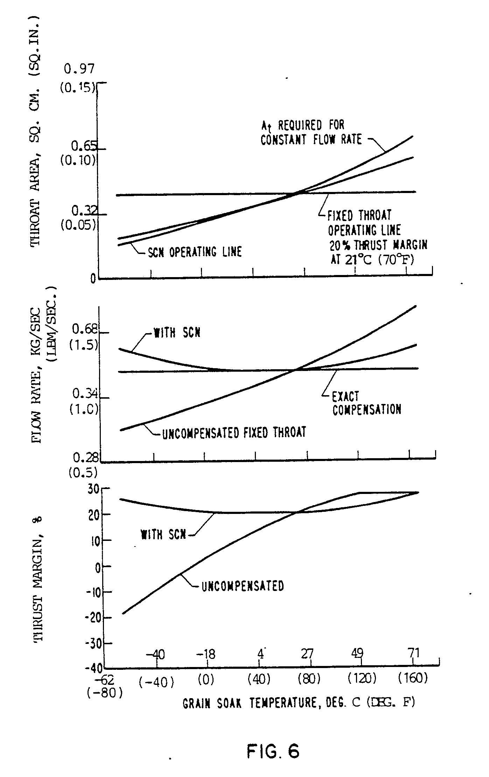

Figure 6, consists of three graphs that illustrate, in sequence the following relationships: 1) The relationship between the throat area ($A_t$) and the "grain soak temperature" theoretically required to maintain a constant gas flow rate within a ducted solid fuel rocket is shown in the upper line. The relationship established by the thrust regulator according to the invention (referred to for the purposes of the drawings as a "self-compensating nozzle" (SCN), as contrasted with a "fixed throat nozzle", is shown in the "SCN operating line". The straight horizontal line in the graph represents the fixed throat area that would give a 20% margin over the thrust required at a constant temperature of 70°F (21°C) in the solid fuel grain, which might typically be required by a "prior art" uncompensated fixed throat configuration. The "SCN" operating line demonstrates the compensating efficiency of the thrust regulator according to the invention; 2) Relationships are shown between the fuel gas flow rate from the generating chamber of a ducted solid fuel rocket and its grain soak temperature, for different degrees of thrust regulation. The relationship theoretically required to establish the same fuel gas flow rate at every ambient temperature within a range of −65°F (−54°C) to +165°F (71°C) is shown in the upper line. The relationship established by the thrust regulator according to the invention is shown as "'with SCN", and an arbitrarily set optimal relationship is represented by the straight horizontal line. The latter is closely approximated by the SCN line; 3) The relationship is graphed between the required thrust margin and the grain soak temperature for an uncompensated fixed throat configuration, compared with that permitted by the relatively constant thrust margins obtainable at ambient temperature values within a critical part (−65°C or −54°C to 70°F or 21°C) of the anticipated ambient temperature range using the thrust regulator according to the invention, thus avoiding wasteful over-production of fuel gas.

With the thrust regulator according to the invention, it is therefore possible to design a system with a thrust margin significantly lower than the 20% arbitrarily set in the typical upper line 1 of Figure 6 and still assure an adequate fuel gas flow for any temperature within the full ambient temperature range anticipated.

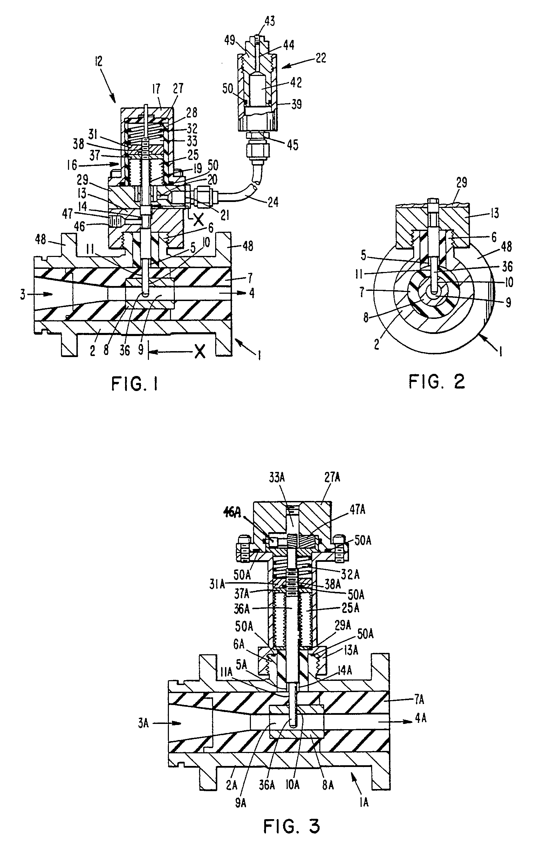

Referring to Figure 1, the thrust regulator according to the invention comprises a flow section 1, a heat-insulated stem section 12 and a temperature-sensning section 22:

The flow section 1 is disposed between a conventional fuel gas generating chamber having a body of solid fuel therein (not shown) and a conventional secondary combustion chamber (not shown), said flow section being defined by a cylindrical wall 2 with outside flanges 48, opposite inlet and outlet gas flow ports 3 and 4, and a flanged regulating passage 5, surrounded by an insulated flange 6, said flow section being lined with an inert tapered heat-resistant insulating liner 7; an erosion-resistant sleeve 8 is concentrically embedded in the inner wall of the insulating liner to form a throat 9; said heat resistant insulating liner 7 and sleeve 8 having openings 11 and 10 forming part of the regulating passage 5 which opens into the throat section 9.

The heat-insulating stem section 12 has its axis generally radial and perpendicular to the axis of the flow section, the stem section comprising a locking cap 13 with a central opening and threaded onto the regulating passage flange 6; a fluid activated bellows assembly 16, including a bellows plate 29 with a central opening and having its face contiguous with the locking cap, a fluid-activated bellows 25 having one end secured to the opposite face of the bellows plate 29, a linkage including a disk-shaped bellows guide assembly attached to the opposite end of the bellows 25 and to a flow-restricting valve plunger 36, the bellows guide assembly comprising a bellows guide plate 37 and a plunger-retaining plate 31 contiguous with and attached to the bellows guide plate 37; the stem section 12 further comprising a bellows assembly cover 17 in the form of an inverted cup peripherally secured at its open end to the bellows plate 29 and having a radially outer insulated wall 27 and a cylindrical insulated side wall 28, and a reactive biasing device in the form of a compression spring 32 internally mounted between the plunger retainer plate 31 and the outer wall 27 of the bellows assembly cover; the stem section internally defining an outer cavity 33 and inner and middle passages 14 and 19, and including the central opening in the locking cap 13 and extending through the insulating liner 7 and sleeve 8 of the regulating passage; the flow-restricting valve plunger 36 having its end threaded into opening 38 in the plunger retainer plate 31, and being slidable in the longitudinal passage 14 to project within the throat 9 of the flow section and also extending within the middle passage 19 and outer cavity 33; said stem section additionally having a plunger locking device 46 for fixing the position of the valve plunger as desired, for instance for testing purposes, and including a threaded locking screw 47 set for travel perpendicular to the axis of the plunger 36; the bellows plate 29 forming a base for the bellows 25 and incorporating a channel 20 for fluid connected at one end to the bellows 25 and connected at the opposite end through port 21 and external conduit 24 to an external fixed volume fluid reservoir 22, the outer insulated wall 27 of the bellows assembly cover 17 defining the end of the outer cavity 33 that contains the bellows 25, the plunger retainer plate 31 and the bellows guide plate 37 having diameters small enough to permit reciprocal movement within the outer cavity 33 under the biasing influence of the compression spring 32; the range of movement and the dimensions of the valve plunger 36 being such that the valve plunger 36 will not completely block the throat 9 of the flow section.

The temperature-sensing section consists essentially of the fixed volume fluid reservoir 22 made of heat conductive material, which is preferably located in indirect isothermal contact with the body of solid fuel, the reservoir and the associated conduit 24 and channel 20 being filled with a hydraulic fluid of high coefficient of thermal expansion; the reservoir being defined by inner and outer walls 39 and 49, a central fluid chamber 42 and a fluid bleed plug 43 threaded into the pressure adjustment port 44 at the remote end of the central chamber 42, with an outlet port 45 located at the opposite end to permit pressure changes in the fluid to be transmitted through conduit 24 and channel 20 to the bellows assembly 16; whereby a change in the ambient temperature will cause responsive movement of the bellows 25, bellows guide plate 37, plunger retainer plate 31, and plunger 36 and proportionately affect the extent of blockage of the throat 9 and the potential rate of fuel gas delivery to the secondary combustion chamber.

Figure 2 illustrates a partial longitudinal section of flow channel 1 along axis lines X—X of the device shown in Figure 1, illustrating a housing wall 2, a heat-resistant insulator liner 7, and a concentric embedded erosion resistant sleeve 8 defining the throat 9, and showing part of the valve plunger 36.

Figure 3 depicts a structural modification of the device represented in Figure 1. Reference numerals in this figure refer, where relevant, to similar features which correspond in Figures 1 and 3, but have the suffix A. The fixed-volume fluid reservoir 22 of Figure 1 is eliminated and its function as a temperature-sensing device is replaced by the modified bellows 25A. The insulation lining the walls 27 and 28 of the bellows assembly cover 17 is eliminated also, so that the bellows 25A will be in substantially isothermal relationship with the solid fuel in the combustion chamber. In addition, a locking device 46A for the plunger 36A is shown as located within the bellows assembly cover 17 in the form of a commercially available pyrotechnic device sometimes known as a "Dimple Motor", which can be fired electrically to move a piston in the device into binding contact with one side of the valve plunger when the solid fuel is ignited; the valve plunger 36A is shown as having a serrated section that will be engaged by the piston and that will be forced into engagement with adjacent serrations (47A) on the inner face of the bellows assembly cover 17. The locking device will be used if it is desired to prevent further movement of the plunger during the flight of the rocket, thereby permitting a substantially constant rate of fuel generation. Any alternative means that can be externally activated to immobilize the plunger 36A can be used, and any such device can of course be incorporated in the modification of Figure 1.

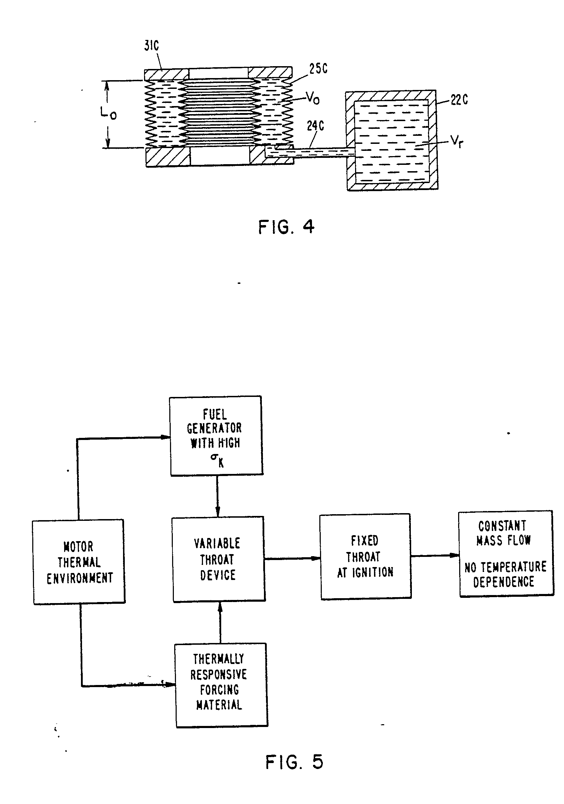

Figure 4 is a diagrammatic representation of the temperature-activated hydraulic mechanism represented in Figures 1 and 2, by which a change in the ambient temperature promotes a corresponding change in the fluid volume in the system causing fluid flow out of or into the reservoir 22C through channel 24C into or out of the bellows 25C, resulting in movement of plunger retainer 31C and attached plunger (not shown).

The fluid-bellows system of the present invention produces a surprisingly substantial plunger movement or stroke length as the temperature varies between $-54°C$ and $71°C$. Total plunger movement can be shown to be directly proportional to the active length of the temperature sensitive element. By utilizing a fixed volume reservoir in addition to a metal bellows, the maximum length, $L_o$, of the bellows is minimixed by placing a major portion of the fluid volume in the reservoir 22C.

The theoretical basis for the hydraulic mechanism is represented by the following equations:

$$\Delta V = V_T \phi \Delta T$$

where:
$\Delta V$ = change in volume;
$V_o$ = Fluid Volume in the bellows (25C) in cm.$^3$;
$V_R$ = Fluid Volume in the reservoir (22C) and connecting flow lines in cm.$^3$;
$V_T = V_o + V_R$ = Total Fluid Volume in (cm.$^3$);
$\phi$ is the Volumetric Expansion Coefficient in cm.$^3$/cm.$^3$ deg. C; and
$\Delta T$ is the Temperature Change in deg. C from an initial reference

$$\Delta L = \frac{\Delta V}{A_o} = \frac{(V_o + V_R)\phi\Delta T}{A_o} = \text{Plunger Movement, cm.}$$

where:

$A_o$ = the Effective Annular Area of the Bellows in cm.$^2$.

Hydraulic fluids suitable for use in the present invention must be relatively inert and remain liquid and non-viscous within the effective temperature range. Such fluids include, for instance, silicone fluids, such as Dow-Corning's DC 200 and DC 510 (Trademarks of Dow Corning), or similar compositions. It is important, in each case, that the hydraulic fluid have an adequate thermal coefficient of volumetric expansion ($\phi$) to obtain the desired results. The manufacturer's values in the above-named commercial fluids have been found to be:

$\phi = 600 \times 10^{-6}$ in.$^3$/in.$^3$ deg. F. ($= 1080 \times 10^{-6}$ cm.$^3$/cm.$^3$ deg. C.) for DC 200, and

$\phi = 533 \times 10^{-6}$ in.$^3$/in.$^3$ deg. F. ($= 959.4 \times 10^{-6}$ cm.$^3$/cm.$^3$ deg. C.) for DC 510.

At a given temperature, the mass flow rate (W) of fuel gas from the fuel gas generator chamber may be defined by the formula

$$W = \frac{A_t P_c g_c}{C^*} = \text{mass flow rate;}$$

where $P_c$ is measured in lb/in$^2$ or kg/m$^2$.

The throat area ($A_t$) and chamber pressure ($P_c$) and to a lesser extent, the characteristic exhaust velocity ($C^*$) of the propellant, vary while the gravitational constant ($g_c$) remains constant. The relationship between $A_t$, $P_c$, and $C^*$ must remain substantially constant to assure about the same fuel flow rate at any given temperature within the operating temperature range illustrated in Figure 6, using data derived from standard solid propellant rocket motor ballistics for a typical fuel generator propellant utilizing a self-compensating nozzle as opposed to a fixed throat nozzle.

The valve plunger 36 and the heat resistant sleeve 8 shown in Figure 1, which are directly exposed to the hot fuel rich products flowing from the gas generating chamber to the secondary combustor, must be erosion resistant and have high temperature strength and low thermal expansion within a temperature and pressure environment of about 1100°C. at 14,000 kPa. Suitable materials include compositions of titanium, zirconium and molybdenum (TZM), and tungsten rhenium alloys such as (W-25RE), or tantalum tungsten alloys such as (TA-10W).

The insulating liners employed in the nozzle/valve device of the present invention are preferably prepared from silica-phenolic materials, such as those available commercially from Fiberite Corporation, of Winona, Minn. A particularly suitable example is "MX 2646 molding compound". Carbon-phenolic molded insulators (also available from Fiberite Corporation) are also satisfactory.

Face seals 50 and 50A are preferably solid copper gaskets, copper crush gaskets or metal C-rings made from similar resistant material such as Inconal X-750, preferably those with silver or nickel plating. Such seals are also available commercially from UAP Components, Inc.

High pressure welded metal bellows seals such as used herein are also available commercially from Sealol, Inc. and from The Metal Bellows Corp.

## Claims

1. A temperature-sensitive thrust regulator for a ducted solid-fuel rocket motor comprising: (A) an insulated flow section (1) adapted for conducting fuel-rich gases from a solid-fuel gas-generating chamber, containing a mass of solid fuel, to a secondary combustion chamber within a ducted rocket motor, said insulated flow section having inlet and outlet fuel gas flow ports (3, 4) and a regulating passage through the wall of the flow section between the ports; and (B) a controlling assembly including an enclosed stem section (12) having its inward end surrounding the regulating passage and secured in a gas-tight relationship to the insulated flow section, a flow-restricting valve plunger (36) slidable in the stem section and extendable through the regulating passage into the flow section, a fluid-activated temperature-sensitive expansible element (25) in a monitoring relationship at the outward end of the valve plunger, said temperature sensitive element comprising a bellows (25) filled with a temperature-responsive mass of hydraulic fluid having a high coefficient of thermal expansion and being in substantially isothermal relationship with the fuel-gas generating chamber, a reactive biasing device (32) operatively opposed to expansion of the expansible element, and locking means (47) for immobilizing the flow-restricting valve plunger when the rocket motor is fired; characterized in that the axis of the stem is generally radial to the flow section; one end of the bellows is axially extendable and withdrawable within the stem section, and the flow-restricting valve plunger is operatively connected to the movable end of the bellows for synchronous reciprocation of the bellows and the valve plunger; whereby changes in the ambient temperature affecting the mass of solid fuel in the generating chamber will cause proportional expansion of the hydraulic fluid and movement of the valve plunger.

2. A temperature-sensitive thrust regulator, as claimed in claim 1, further characterized in that the locking means for immobilizing the flow-restricting valve plunger when the rocket motor is fired is activatable externally of the regulator.

3. A temperature-sensitive thrust regulator, as claimed in claim 1 or 2, further characterized in that the stem section contains a temporarily activatable locking device for immobilizing the flow-restricting valve plunger for test purposes.

4. A temperature-sensitive thrust regulator, as claimed in claim 1, 2 or 3, further characterized in that the controlling assembly also comprises a bellows plate forming a base for one end of the bellows, a bellows assembly cover secured to the bellows plate and having a radially outer wall and a cylindrical side wall, a linkage including a disk-shaped bellows guide assembly attached to the opposite end of the bellows and to the flow-restricting valve plunger, and a compression spring mounted between the bellows guide assembly and the outer wall of the bellows assembly cover, the bellows guide assembly having an annular periphery small enough to permit reciprocal movement within the bellows assembly cover.

5. A temperature-sensitive thrust regulator, as claimed in any of the preceeding claims, further characterized in that the controlling assembly also comprises a temperature-sensing fixed-volume reservoir for the hydraulic fluid, which is outside the stem section and hydraulically connected to the bellows, the reservoir being in substantially isothermal relationship with the generating chamber.

6. A temperature-sensitive thrust regulator, as claimed in claim 5, further characterized in that the bellows plate incorporates a channel for the hydraulic fluid connected at one end to the bellows (25) and connected at the opposite end to the fixed volume fluid reservoir.

7. A temperature-sensitive thrust regulator, as claimed in any of the preceeding claims, further characterized in that the radially outer wall and a cylindrical side wall of the bellows assembly cover are insulated.

8. A temperature-sensitive thrust regulator, as claimed in claim 1, further characterized in that the fluid-activated bellows is in substantially isothermal relationship with the generating chamber.

9. A temperature-sensitive thrust regulator, as claimed in any of the preceeding claims, characterized in that a drop from a first to a second ambient temperature before ignition of the solid fuel will cause the flow-restricting valve plunger to be withdrawn, the cross-section area of the flow section to be enlarged, and the rate of fuel-gas generation to be set at the time of ignition at a level providing substantially the same thrust at the second ambient temperature as at the first.

**Patentansprüche**

1. Temperaturempfindliches Schubkraftstellglied für ein Staustrahltriebwerk mit festem Brennstoff umfassend: (A) ein isoliertes Strömungsteilstück (1), das angepaßt ist brennstoffreiche Gase von einer Brenngas aus festem Brennstoff erzeugenden, eine Masse aus festem Brennstoff enthaltenden Kammer, zu einer zweiten Verbrennungskammer innerhalb eines Staustrahltriebwerks zu leiten, wobei das genannte isolierte Strömungsteilstück Brenngaseinlaßströmungsöffnungen und -auslaßströmungsöffnungen (3, 4) und eine regelnde Passage durch die Wand des Strömungsteilstücks zwischen den Öffnungen aufweist; und (B) einen Regelungsaufbau mit einem umschließenden Rohrteilstück (12), dessen nach innen gerichtetes Ende die regelnde Passage umschließt und gasdicht am isolierten Strömungsteilstück befestigt ist, einen strömungsbegrenzenden Ventilkolben (36), der in dem Rohrteilstück verschiebbar und durch die regelnde Passage in das Strömungsteilstück hinein erstreckbar ist, ein fluidbetätigtes temperaturempfindliches dehnbares Element (25) in einer überwachenden Beziehung am äußeren Ende des Ventilkolbens, wobei das temperaturempfindliche Element einen Balg (25) umfaßt, der mit einer auf Temperatur ansprechenden Menge Hydraulikfluid mit einem hohen thermischen Ausdehnungskoeffizienten und zur Brenngas erzeugenden Kammer in im wesentlichen isothermer Beziehung stehend, gefüllt ist, eine reagierende Vorspannungsvorrichtung (32), die entgegengesetzt zur Ausdehnung des dehnbaren Elements wirkt, und Sperrmittel (47), um den strömungsbegrenzenden Ventilkolben festzusetzen, wenn der Raketen motor gezündet wird; dadurch gekennzeichnet, daß die Rohrachse im allgemeinen radial zum Strömungsteilstück liegt; ein Ende des Balges axial dehnbar und innerhlab des Rohrteilstücks zurückziehbar ist und der strömungsbegrenzende Ventilkolben wirksam mit dem beweglichen Ende des Balges für synchrone Hin- und Herbewegung des Balges und des Ventilkolbens verbunden ist; wobei Änderungen in der Umgebungstemperatur, welche die Masse des festen Brennstoffs in der erzeugenden Kammer beeinflussen, proportionale Ausdehnung des Hydraulikfluids und Bewegung des Ventilkolbens verursachen werden.

2. Temperaturempfindliches Schubkraftstellglied nach Anspruch 1, weiter dadurch gekennzeichnet, daß das Sperrmittel zur Festsetzung des strömungsbegrenzenden Ventilkolbens, wenn der Raketenmotor gezündet ist, außerhalb des Stellgliedes aktivierbar ist.

3. Temperaturempfindliches Schubkraftstellglied nach Anspruch 1 oder 2, weiter dadurch gekennzeichnet, daß das Rohrteilstück eine zeitweilig aktivierbare Sperrvorrichtung zur Festsetzung des strömungsbegrenzenden Ventilkolbens zu Testzwecken enthält.

4. Temperaturempfindliches Schubkraftstellglied nach Anspruch 1, 2 oder 3, weiter dadurch gekennzeichnet, daß der Regelungsaufbau auch eine Balgplatte, die eine Basis für ein Ende des Balges bildet, eine Balgaufbauverkleidung, die an der Balgplatte befestigt ist und eine radiale äußere Wand und eine zylindrische Seitenwand aufweist, eine Verbindung, die einen scheibenförmigen Balgführungsaufbau enthält, der am entgegengesetzten Ende des Balges und am strömungsbegrenzenden Ventilkolben angebracht ist, und eine Druckfeder umfaßt, die zwischen dem Balgführungsaufbau und der äußeren Wand der Balgaufbauverkleidung montiert ist, wobei der Balgführungsaufbau einen ringförmigen Umfang aufweist, der klein genug ist, hin- und hergehende Bewegungen innerhalb der Balgaufbeuverkleidung zuzulassen.

5. Temperaturempfindliches Schubkraftstellglied nach einem der vorhergehenden Ansprüche, weiter dadurch gekennzeichnet, daß der Regelungsaufbau auch ein temperaturmessendes Reservoir festgelegten Volumens für das Hydraulikfluid umfaßt, das außerhalb des Rohrteilstücks liegt und hydraulisch mit dem Balg verbunden ist, wobei das Reservoir zur erzeugenden Kammer in in wesentlichen isothermer Beziehung steht.

6. Temperaturempfindliches Schubkraftstellglied nach Anspruch 5, weiter dadurch gekennzeichnet, daß die Balgplatte einen Kanal für das Hydraulikfluid enthält, der an einem Ende mit dem Balg (25) verbunden ist, und an dem entgegengesetzten Ende mit dem Fluidreservoir festgelegten Volumens verbunden ist.

7. Temperaturempfindliches Schubkraftstellglied nach einem der vorhergehenden Ansprüche, weiter dadurch gekennzeichnet, daß die radiale äußere Wand und eine zylindrische Seitenwand der Balgaufbauverkleidung isoliert sind.

8. Temperaturempfindliches Schubkraftstellglied nach Anspruch 1, weiter dadurch gekennzeichnet, daß der fluidbetätigte Balg zur erzeugenden Kammer in im wesentlichen isothermer Beziehung steht.

9. Temperaturempfindliches Schubkraftstellglied nach einem der vorhergehenden Ansprüche, dadurch gekennzeichnet, daß ein Abfall von einer ersten zu einer zweiten Umgebungstemperatur von Zündung des Festkraftstoffs bewirkt, daß der strömungsbegrenzende Ventilkolben zurückgezogen wird, die Querschnittsfläche des Strömungsteilstücks vergrößert wird, und die Brenngaserzeugungsgeschwindigkeit zum Zündzeitpunkt auf ein Niveau gesetzt wird, das im wesentlichen dieselbe Schubkraft zu einer zweiten Umgebungstemperatur bereitstellt wie zu der ersten.

**Revendications**

1. Régulateur de poussée sensible à la température pour un combiné statoréacteur-fusée à propergol solide, comprenant: (A) une section de passage isolée (1) destinée à conduire des gaz riches en carburant depuis une chambre de production de gaz de propergol contenant une masse de propergol jusqu'à une chambre de combustion secondaire dans un combiné statoréacteur-fusée, cette section de passage isolée comportant des orifices d'entrée et de sortie (3, 4) du courant de gaz de propergol et un passage de régulation (5) qui traverse la paroi de la section de passage entre ces orifices; et (B) une unité de commande comprenant une section à tige fermée (12) dont l'extrémité dirigée vers l'intérieur entoure le passage de régulation (5) et qui est fixée en rapport d'étanchéité aux gaz à la section à tige fermée, un plongeur de valve d'étranglement du courant (36) coulissant dans la section à tige et susceptible de s'étendre à travers le passage de régulation pour pénétrer dans la section de passage (1), un élément expansible (25) sensible à la température et actionné par un fluide, en rapport de contrôle à l'extrémité du plongeur de valve dirigée vers l'extérieur, cet élément sensible à la température comprenant un soufflet (25) remplit d'une masse reagissant à la température de fluide hydraulique ayant un coefficient de dilatation thermique élevé et étant en rapport pratiquement isothermique avec la chambre de production de gaz de propergol, un dispositif de sollicitation réactive (32), opposé fonctionnellement à l'expansion de l'élément expansible, et des moyens de verrouillage (47) pour immobiliser le plongeur de valve d'étranglement du courant lorsque le moteur-fusée est allumé; caractérisé en ce que l'axe de la section à tige (12) est généralement radial par rapport à la section de passage (1), en ce que l'une des extrémités du soufflet (25) est extensible et rétractable axialement dans la section à tige (12), et en ce que le plongeur de valve d'étranglement du courant (36) est raccordé fonctionnellement à l'extrémité mobile du soufflet (25) en vue d'un mouvement de va-et-vient synchrone du soufflet (25) et du plongeur de valve (36), de telle manière que les variations de la température ambiante affectant la masse de propergol dans la chambre de production des gaz produisent une expansion proportionnelle du fluide hydraulique et un déplacement du plongeur de valve (36).

2. Régulateur de poussée sensible à la température selon la revendication 1, caractérisé en outre en ce que les moyens de verrouillage destinés à immobiliser le plongeur de valve d'étranglement du courant (36) lorsque le moteur-fusée est allumé peuvent être actionnés de l'extérieur du régulateur.

3. Régulateur de poussée sensible à la température selon la revendication 1 ou 2, caractérisé en outre en ce que la section à tige (12) contient un dispositif de verrouillage (46) actionnable temporairement pour immobiliser le plongeur de valve d'étranglement du courant (36) à des fins d'essai.

4. Régulateur de poussée sensible à la température selon l'une quelconque des revendications 1 à 3, caractérisé en outre en ce que l'unité de commande comprend également une plaque de soufflet (29) formant un socle pour l'une des extrémités du soufflet (25), un couvercle (17) de l'ensemble à soufflet fixé à la plaque de soufflet (29) et présentant une paroi radialement extérieure (27) et une paroi latérale cylindrique (28), une transmission comprenant un ensemble guide-soufflet discoïdal (37, 31) attaché à l'extrémité opposée du soufflet (25) et au plongeur de valve d'étranglement du courant (36), et un ressort de compression (32) monté entre l'ensemble guide-soufflet (37, 31) et la paroi extérieure (27) du couvercle (17) de l'ensemble à soufflet, l'ensemble guide-soufflet ayant une périphérie annulaire suffisamment petite pour permettre un mouvement de va-et-vient dans le couvercle (17) de l'ensemble à soufflet.

5. Régulateur de poussée sensible à la température selon l'une quelconque des revendications 1 à 4, caractérisé en outre en ce que l'unité de commande comprend également un réservoir détecteur de température à volume fixe (22) pour le fluide hydraulique, réservoir qui est à l'extérieur de la section à tige (12) et est communication hydraulique avec le soufflet (25), le réservoir étant en rapport pratiquement isothermique avec la chambre de production de gaz.

6. Régulateur de poussée sensible à la température selon la revendication 5, caractérisé en outre en ce que la plaque de soufflet (29) comporte un passage (20) pour le fluide hydraulique, relié par l'une de ses extrémités au soufflet (25) et relié par son extrémité opposée au réservoir de fluide à volume fixe (22).

7. Régulateur de poussée sensible à la température selon l'une quelconque des revendications 1 à 6, caractérisé en outre en ce que la paroi radialement extérieure (27) et une paroi latérale cylindrique (28) du couvercle (17) de l'ensemble à soufflet sont isolées.

8. Régulateur de poussée sensible à la température selon la revendication 1, caractérisé en outre en ce que le soufflet actionné par fluide (25) est en rapport pratiquement isothermique avec la chambre produisant les gaz.

9. Régulateur des poussée sensible à la température selon l'une quelconque des revendications 1 à 8, caractérisé en ce qu'une chute d'une première à une seconde températures ambiantes avant l'allumage du propergol a pour effet que le plongeur de valve d'étranglement du courant (36) est ramené en arrière, que la lumière de la section de passage (1) est augmentée et que le débit de production de gaz de propergol est régle, au moment de l'allumage, à un niveau qui, à la seconde température ambiante, donne pratiquement la même poussée qu'à la première.

FIG. I

FIG. 2

FIG. 3

FIG. 4

FIG. 5

2

FIG. 6

3